# FASCICULE DE BREVET EUROPEEN

(11) **EP 3 065 541 B1**
(45) Date de publication et mention de la délivrance du brevet: **03.01.2018**
(21) Numéro de dépôt: 14806003.1
(22) Date de dépôt: 04.11.2014
(51) Int. Cl.: A01K 1/01

(54) **KIT DE SACS FILTRANTS POUR LITIÈRE POUR CHAT**
FILTERBEUTELSET FÜR KATZENSTREU
KIT OF FILTERING BAGS FOR A CAT LITTER

(30) Priorité: 08.11.2013 FR 1360933
(43) Date de publication de la demande: 14.09.2016
(73) Titulaire: Schmit, Michaël, 94000 Créteil (FR)
(72) Inventeur: Schmit, Michaël, 94000 Créteil (FR)
(74) Mandataire: Dejade & Biset
(86) Numéro de dépôt international: PCT/FR2014/052803
(87) Numéro de publication internationale: WO 2015/067885

(56) Documents cités:
- DE-U1-202011 005 454
- US-A- 4 756 273
- US-A- 5 038 721
- US-B1- 6 595 159

## Description

L'invention a trait au domaine de l'hygiène animalière. Plus particulièrement l'invention concerne la purification des bacs à litière pour animaux domestiques.

Les animaux domestiques, typiquement les chats, font couramment leurs besoins naturels dans des bacs remplis de litière. Cette litière nécessite, pour des raisons d'hygiène, d'être régulièrement remplacée par de la litière propre.

Ce changement de litière est long et peu agréable pour les utilisateurs. Une litière largement commercialisée comprend des granulés agglomérants au contact de l'urine et des défécations des animaux. Le changement de la litière peut alors se faire au moyen d'une pelle perforée permettant de filtrer la litière pour garder et réutiliser la litière saine et jeter la litière souillée.

Le document FR 2 851 421 (SCHMIT) présente un dispositif pour nettoyer le bac à litière pour chat, ce dispositif comprenant un lot de sacs jetables. A l'exception du dernier sac, les sacs sont perforés en leur centre permettant, lorsqu'un utilisateur soulève un sac, de laisser passer la litière saine par les perforations tout en retenant la litière agglomérée qui ne peut pas traverser les perforations. Le dernier sac non-perforé du lot permet de protéger le bac à litière pour chat. Le dernier sac non-perforé du lot permet également de changer de lot.

Cette solution donne satisfaction mais reste cependant perfectible.

En effet, lorsque la litière est contenue dans le dernier sac du lot, il est difficile pour l'utilisateur de la reverser sur un nouveau lot.

De plus, les sacs perforés ne garantissent qu'une hygiène partielle car, lorsque la litière est filtrée, de l'urine non captée par les granulés de litière ou des granulés non agglomérés peuvent couler du sac entre le bac de litière et la poubelle, ce qui oblige l'utilisateur à nettoyer le sol après son passage.

Divers sacs pour litière pour chat sont connus des documents DE 20 2011 005454 U1, US 5 038 721 A et US 6 595 159 B1. Un premier objectif est de proposer un kit de sacs filtrants permettant à l'utilisateur de séparer la litière saine de la litière souillée et des excréments.

Un deuxième objectif est de proposer un kit de sacs filtrants pour filtrer rapidement de la litière pour chat.

Un troisième objectif est de proposer un kit de sacs filtrants pour filtrer facilement de la litière pour chat.

Un quatrième objectif est de proposer un kit de sacs filtrants hygiéniques.

A cet effet, il est proposé, en premier lieu, un sac filtrant pour litière pour chat comprenant :
- une partie supérieure définissant un bord supérieur délimitant une ouverture du sac ;
- une partie inférieure définissant un bord inférieur où le sac est fermé hermétiquement, et
- une partie intermédiaire entre la partie supérieure et la partie inférieure, munie de perforations destinées au filtrage de la litière,
le sac étant pliable entre une configuration de tamis dans laquelle la partie inférieure est rabattue sur la partie supérieure de sorte à former un pli au droit duquel se trouvent les perforations, cette configuration permettant de réaliser un filtrage de la litière par les perforations, et une configuration de poche dans laquelle le sac est déplié et la litière se trouve piégée dans la partie inférieure du sac, cette configuration permettant un transport hygiénique de la litière, le sac étant maintenu en configuration de tamis par un moyen d'accrochage amovible.

Le passage du sac de sa configuration de tamis à sa configuration de poche se fait simplement par retrait du moyen d'accrochage amovible, le poids des excréments et de la litière restant dans le sac forçant la partie inférieure à se déplier pour contenir la litière et les excréments. Dès lors, l'utilisateur peut transporter le sac de manière hygiénique sans risquer l'écoulement de granulés non agglomérés.

Diverses caractéristiques supplémentaires peuvent être prévues, seules ou en combinaison :
- le moyen d'accrochage amovible se présente sous la forme d'une bande adhésive ;
- la partie supérieure comprend des poignées pour la préhension du sac ;
- les poignées se présentent sous la forme de liens coulissants logés au niveau du bord supérieur et permettent la fermeture du sac ;
- les liens coulissants formant les poignées sont réalisés dans une matière élastique de sorte à favoriser la fixation du sac à un bac à litière dans lequel le sac est logé.

Il est proposé, en deuxième lieu, un kit de sacs pour litière pour chats comprenant des sacs filtrants, tels que présentés précédemment, superposés pour un filtrage automatique de la litière lorsqu'un sac est soulevé et un sac de fond pour un filtrage différé de la litière, le sac de fond comprenant une partie supérieure définissant un bord supérieur délimitant une ouverture du sac et une partie inférieure munie de perforations pour permettre le filtrage de la litière.

Diverses caractéristiques supplémentaires peuvent être prévues, seules ou en combinaison :
- le sac de fond est pliable entre une configuration de poche dans laquelle la partie inférieure est rabattue sur la partie supérieure et une configuration de tamis dans laquelle le sac de fond est déplié pour permettre le filtrage de la litière ;
- le sac de fond est maintenu dans sa position de poche par un moyen d'accrochage amovible ;
- le moyen d'accrochage amovible se présente sous la forme d'une bande adhésive ;
- le sac de fond comprend, dans la partie supérieure, des poignées pour la préhension du sac ;
- les poignées se présentent sous la forme de liens coulissants logés au niveau du bord supérieur et permettent la fermeture du sac ;
- les liens coulissants formant les poignées sont réalisés dans une matière élastique de sorte à favoriser la fixation du kit à un bac à litière dans lequel le kit est logé.

D'autres objets et avantages de l'invention apparaîtront à la lumière de la description d'un mode de réalisation, faite ci-après en référence aux dessins annexés dans lesquels :
- la figure 1 est une vue en perspective de dessus d'un bac à litière pour chat comprenant un kit de sacs filtrants ;
- la figure 2 est une vue en perspective de dessus montrant une opération de filtrage de litière, le sac étant en configuration de tamis ;
- la figure 3 est une vue en perspective de dessus montrant un sac en configuration de poche ;
- la figure 4 est une vue en perspective de dessus montrant un sac de fond avant filtrage au dessus d'un bac à litière vide ;

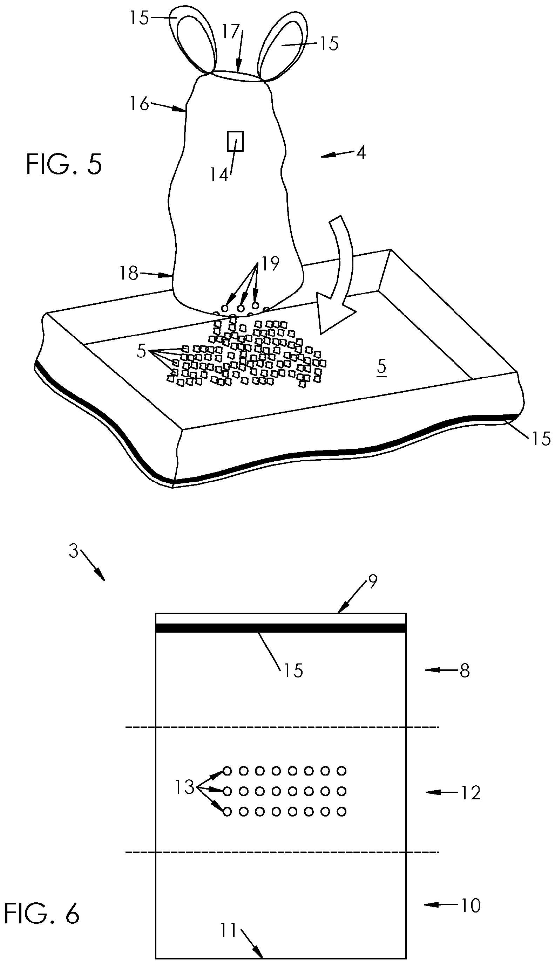

- la figure 5 est une vue en perspective de dessus montrant une opération de filtrage au moyen d'un sac de fond, un nouveau kit ayant été mis en place dans le bac à litière ;
- la figure 6 est une vue schématique d'un sac filtrant aplati en position de poche ;

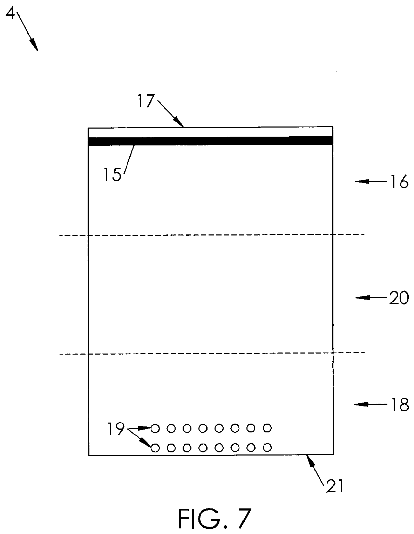

- la figure **7** est une vue schématique d'un sac de fond en configuration de tamis.

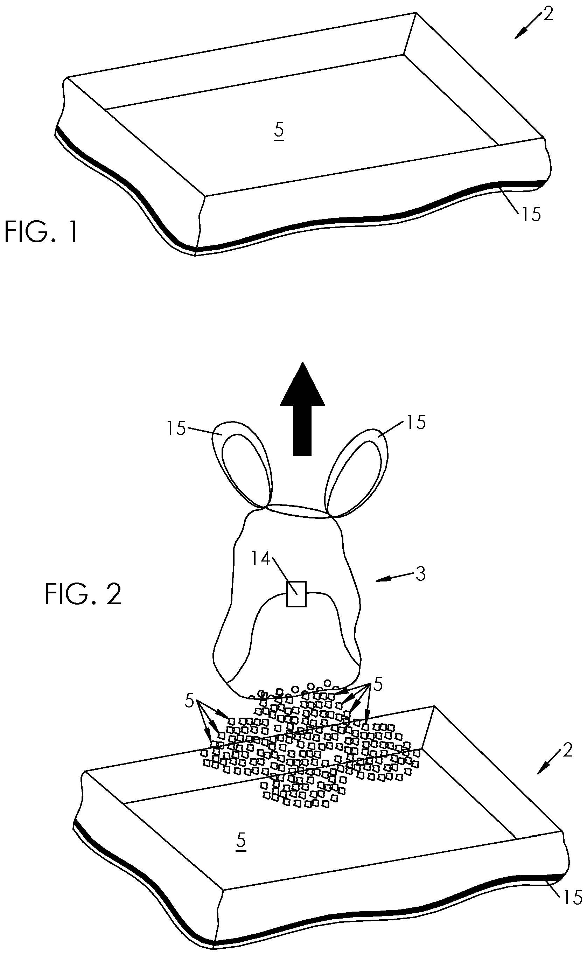

Sur la figure 1 est représenté un bac **1** à litière pour chat comprenant un kit **2** de sacs **3, 4** filtrants pour filtrer la litière. Le kit **2** se compose de sacs **3** superposés et d'un sac **4** de fond différent des sacs **3** supérieurs, comme il sera expliqué ci-après.

Un tel kit **2** permet d'utiliser une litière agglomérante et de filtrer régulièrement cette litière par mesure d'hygiène par exemple. Ce filtrage de la litière permet également, pour les possesseurs d'animaux domestiques, de réaliser des économies en réutilisant une litière **5** saine filtrée et en ne jetant que la litière **6** souillée par les excréments **7** et l'urine des animaux.

Chaque sac **3** filtrant, à l'exception du sac **4** de fond, comprend :
- une partie **8** supérieure définissant un bord **9** supérieur délimitant une ouverture du sac **3** ;
- une partie **10** inférieure définissant un bord **11** inférieur où le sac **3** est fermé hermétiquement, et
- une partie **12** intermédiaire entre la partie supérieure **8** et la partie **10** inférieure munie de perforations **13** destinées au filtrage de la litière.

Le sac **3** est, en outre, pliable entre une configuration de tamis dans laquelle la partie **10** inférieure est rabattue sur la partie **8** supérieure de sorte à former un pli au droit duquel se trouvent les perforations **13** et une configuration de poche dans laquelle le sac **3** est déplié et la litière **6** souillée par les excréments **7** et l'urine des animaux se trouve piégée dans la partie **10** inférieure du sac **3.**

La configuration de tamis permet de réaliser un filtrage automatique de la litière par les perforations **13** lorsque le sac **3** est soulevé du bac **1 par** un utilisateur.

La configuration de poche permet un transport hygiénique de la litière **6** souillée et des excréments **7** restant dans le sac **3** une fois la litière **5** saine évacuée par les perforations **13.**

Le sac **3** est pourvu d'un un moyen **14** d'accrochage amovible qui sert à le maintenir en configuration de tamis. Selon un mode de réalisation préféré, le moyen **14** d'accrochage amovible se présente sous la forme d'une bande adhésive permettant d'assembler de manière amovible la partie **8** supérieure et la partie **10** inférieure sans les dégrader.

En outre, la partie **8** supérieure du sac **3** comprend des poignées **15** pour faciliter la préhension du sac **3.** Selon un mode préféré de réalisation, les poignées **15** se présentent sous la forme de liens coulissants, avantageusement élastiques, logés dans le bord **9** supérieur. Ainsi, lorsque l'utilisateur tire sur les poignées **15** du sac **3** pour le soulever, les liens coulissent et provoquent la fermeture de la partie **8** supérieure du sac **3.**

L'élasticité des poignées **15** permet à l'utilisateur de fixer le sac **3** facilement sur le bac **1,** les poignées **15** venant alors épouser la forme du bac **1**.

Le sac **4** de fond comprend, quant à lui, une partie **16** supérieure définissant un bord **17** supérieur délimitant une ouverture du sac **4** de fond, une partie intermédiaire **20** dépourvue de perforations **19** et une partie **18** inférieure définissant un bord **21** inférieur où le sac **4** de fond est fermé hermétiquement, la partie **18** inférieure étant munie de perforations **19** pour permettre le filtrage de la litière.

A l'instar des sacs **3** précédemment présentés, le sac **4** de fond est pliable entre une configuration de poche et une configuration de tamis. Cependant, dans la configuration de poche, la partie **18** inférieure est rabattue sur la partie **16** supérieure et dans la configuration de tamis le sac **4** de fond est déplié pour permettre le filtrage de la litière.

Le sac **4** de fond est maintenu dans sa position de poche par un moyen d'accrochage **14** amovible. Selon un mode de réalisation préféré, le moyen **14** d'accrochage amovible se présente également sous la forme d'une bande adhésive permettant d'assembler de manière amovible la partie **16** supérieure et la partie **18** inférieure sans les dégrader.

De plus, la partie **16** supérieure du sac **4** de fond comprend également des poignées **15** pour faciliter la préhension du sac **4** de fond. Selon un mode préféré de réalisation, les poignées **15** se présentent sous la forme de liens coulissants, avantageusement élastiques, logés au niveau du bord **17** supérieur.

Ainsi, lorsque l'utilisateur tire sur les poignées **15** du sac **4** de fond pour le soulever, les liens **15** coulissent et provoquent la fermeture de la partie **16** supérieure du sac **4** de fond.

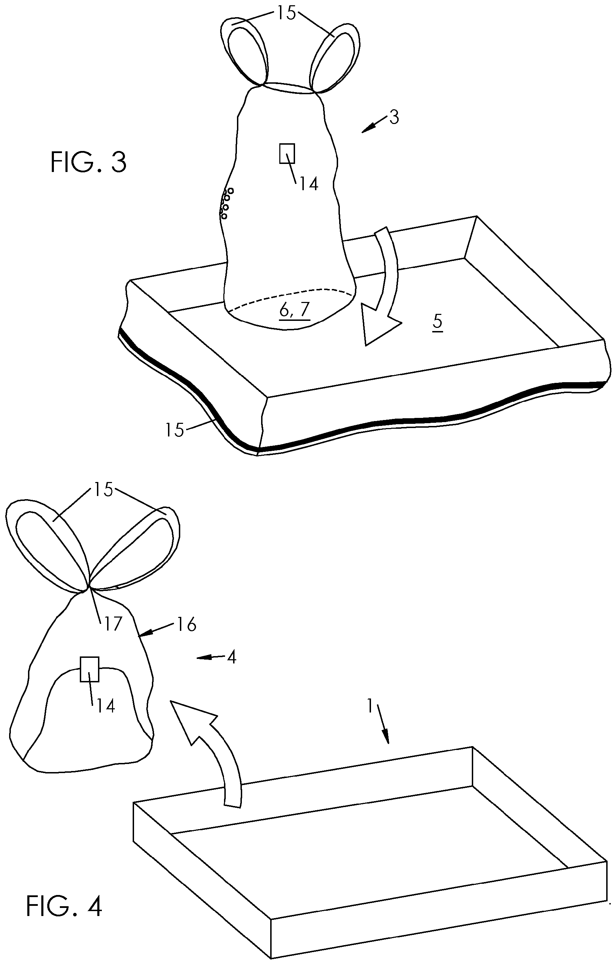

En utilisation, l'utilisateur prend un bac **1** à litière vide puis y introduit le kit **2** de sorte que le sac **4** de fond soit au fond du bac **1** à litière et que les bords **9, 17** des sacs **3, 4** du kit débordent du bac **1,** comme cela est visible sur la figure 4 dans laquelle le bac **1** à litière est vide et sur la figure 1 dans laquelle le kit **2** est mis en place dans le bac **1** à litière. Une fois le kit **2** installé dans le bac **1** à litière, l'utilisateur peut remplir le bac **1** avec de la litière **5** agglomérante saine, et le bac **1** à litière peut alors être utilisé par les animaux.

Lorsque l'utilisateur décide de changer la litière, il tire alors sur les poignées **15** du sac **3** supérieur du kit **2** de sorte à sortir le sac **3** du bac **1** comme cela est représenté sur la figure 2. La litière contenue est alors filtrée. Les granulés de litière **5** saine traversent les perforations **13** pour retomber dans le bac **1** à litière alors que les granulés de litière **6** souillés qui se sont agglomérés, ainsi que les excréments **7,** ne peuvent par traverser ces mêmes perforations **13** et demeurent piégés dans le sac **3.**

Une fois le filtrage terminé, l'utilisateur tire sur le moyen **14** d'accrochage amovible de sorte à libérer la partie **10** inférieur du sac **3.** Sous le poids de la litière **6** souillée et des excréments **7,** le sac **3** se déplie et adopte sa configuration de poche, la litière **6** souillée et les excréments **7** se retrouvent alors piégés dans la partie **10** inférieure du sac **3,** favorisant alors le transport hygiénique pour jeter le sac **3** à la poubelle ou au compost dans le cas d'un sac **3** biodégradable.

La litière **5** saine peut alors être réutilisée et le niveau de litière peut être complété, le cas échéant, par un ajout de litière neuve.

L'utilisateur peut ainsi filtrer la litière de cette manière avec les sacs **3** suivants exceptés pour le sac **4** de fond.

L'utilisation du sac **4** de fond diffère quelque peu de l'utilisation des autres sacs **3.** Lorsque la litière est dans le sac **4** de fond, et qu'il faut la changer, deux possibilités s'offrent à l'utilisateur.

Dans un premier cas, la litière n'est plus utilisable, auquel cas l'utilisateur retire le sac **4** de fond du bac **1** puis le jette à la poubelle ou au compost puis installe un nouveau kit **2** dans le bac **1** vide et recommence un nouveau cycle avec une nouvelle litière.

Dans un deuxième cas, la litière est encore utilisable, et l'utilisateur peut la filtrer avec le sac **4** de fond. Pour ce faire, l'utilisateur tire sur les poignées **15** du sac **4** de fond pour le sortir du bac **1.** Le sac **1** étant maintenu en configuration de poche, aucun filtrage n'est réalisé. L'utilisateur installe alors un nouveau kit **2** dans le bac **1** puis tire sur le moyen **14** d'accrochage amovible de sorte à libérer la partie **18** inférieure du sac **4** de fond.

Le poids de la litière et des excréments **7** pousse le sac **4** de fond à adopter sa configuration de tamis, la litière pouvant alors être filtrée par les perforations **19** de la partie **18** inférieure du sac **4** de fond.

Comme dans les sacs **3** précédemment présentés, les granulés de litière **5** saine traversent les perforations **19** du sac **4** de fond pour retomber dans le bac **1** à litière tandis que les granulés de litière **6** souillée qui se sont agglomérés, ainsi que les excréments **7,** ne peuvent pas traverser ces mêmes perforations **19** et demeurent piégés dans le sac **4** de fond.

Une fois le filtrage terminé, l'utilisateur peut replier le sac **4** de fond dans sa configuration de poche et le maintenir dans cette configuration par le moyen **14** d'accrochage amovible, puis jeter le sac **4** de fond à la poubelle ou au compost dans le cas d'un sac **4** de fond biodégradable.

Le kit **2** de sacs filtrants tel que présenté procure les avantages suivants :
- il permet à l'utilisateur de séparer la litière **5** saine de la litière **6** souillée et des excréments **7 ;**
- il permet de filtrer rapidement de la litière pour chat ;
- il permet de filtrer facilement de la litière pour chat ;
- il est hygiénique.

Le filtrage est réalisé par les perforations **13, 19** pratiquées dans les sacs **3, 4** qui permettent de laisser s'écouler hors des sacs la litière **5** saine, lorsque les sacs **3, 4** sont en configuration de tamis, tout en gardant la litière **6** souillée et les **7** excréments à l'intérieur des sacs **3, 4,** lorsque ceux-ci sont en configuration de poche.

Le filtrage est rapide et facile puisque la seule opération pour l'utilisateur est de tirer sur les poignées **15** des sacs **3, 4** pour les sortir du bac **1** à litière, le filtrage s'opérant automatiquement pour les sacs **3** supérieurs, ou bien en tirant sur le moyen **14** d'accrochage amovible du sac **4** de fond pour que celui-ci adopte sa configuration de tamis.

Enfin, l'hygiène est assurée par la configuration de poche dans laquelle l'utilisateur peut replacer le sac **3, 4** de fond après le filtrage, soit en tirant sur le moyen **14** d'accrochage amovible pour les sacs **3** supérieurs, soit en repliant le sac **4** de fond en configuration de poche et en le maintenant dans cette configuration par le moyen **14** d'accrochage amovible pour le sac **4** de fond.

## Revendications

1. Sac (**3**) filtrant pour litière pour chat comprenant :
- une partie (**8**) supérieure définissant un bord (**9**) supérieur délimitant une ouverture du sac (**3**) ;
- une partie (**10**) inférieure définissant un bord (**11**) inférieur où le sac (**3**) est fermé hermétiquement, et
- une partie (**12**) intermédiaire entre la partie (**8**) supérieure et la partie (**10**) inférieure munie de perforations (**13**) destinées au filtrage de la litière,
**caractérisé en ce que** le sac (**3**) est pliable entre une configuration de tamis dans laquelle la partie (**10**) inférieure est rabattue sur la partie (**8**) supérieure de sorte à former un pli au droit duquel se trouvent les perforations (**13**), cette configuration permettant de réaliser un filtrage de la litière par les perforations (**13**), et une configuration de poche dans laquelle le sac (**3**) est déplié et la litière se trouve piégée dans la partie (**10**) inférieure du sac (**3**), cette configuration permettant un transport hygiénique de la litière, le sac (**3**) comprenant en outre un moyen (**14**) d'accrochage amovible pour maintenir la partie (**10**) inférieure sur la partie (**8**) supérieure.

2. Sac (**3**) selon la revendication précédente **caractérisé en ce que** le moyen (**14**) d'accrochage amovible se présente sous la forme d'une bande adhésive.

3. Sac (**3**) selon l'une quelconque des revendications précédentes **caractérisé en ce que** la partie (**8**) supérieure comprend des poignées (**15**) pour la préhension du sac (**3**).

4. Sac (**3**) selon la revendication précédente **caractérisé en ce que** les poignées (**15**) se présentent sous la forme de liens coulissants logés au niveau du bord (**9**) supérieur et permettent la fermeture du sac (**3**).

5. Sac selon la revendication précédente **caractérisé en ce que** les liens coulissants formant les poignées (**15**) sont réalisés dans une matière élastique de sorte à favoriser la fixation du sac (**3**) à un bac (**1**) à litière dans lequel le sac (**3**) est logé.

6. Kit (**2**) de sacs (**3, 4**) pour litière pour chats comprenant des sacs (**3**) filtrants, selon l'une des revendications précédentes, superposés pour un filtrage automatique de la litière lorsque le sac (**3**) est soulevé et un sac (**4**) de fond pour un filtrage différé de la litière, le sac (**4**) de fond comprenant une partie (**16**) supérieure définissant un bord (**17**) supérieur délimitant une ouverture du sac (**4**) et une partie (**18**) inférieure munie de perforations (**19**) pour permettre le filtrage de la litière.

7. Kit (**2**) selon la revendication précédente **caractérisé en ce que** le sac (**4**) de fond est pliable entre une configuration de poche dans laquelle la partie (**18**) inférieure est rabattue sur la partie (**16**) supérieure et une configuration de tamis dans laquelle le sac (**4**) de fond est déplié pour permettre le filtrage de la litière.

8. Kit (**2**) selon la revendication précédente **caractérisé en ce que** le sac (**4**) de fond est maintenu dans sa position de poche par un moyen (**14**) d'accrochage amovible.

9. Kit (**2**) selon la revendication précédente **caractérisé en ce que** le moyen (**14**) d'accrochage amovible se présente sous la forme d'une bande adhésive.

10. Kit (**2**) selon l'une des revendications 6 à 9 **caractérisé en ce que** le sac (**4**) de fond comprend, dans la partie (**16**) supérieure, des poignées (**15**) pour la préhension du sac (**4**).

11. Kit (**2**) selon la revendication précédente **caractérisé en ce que** les poignées (**15**) se présentent sous la forme de liens coulissants logés au niveau du bord (**17**) supérieur et permettent la fermeture du sac (**4**) de fond.

12. Kit (**2**) selon la revendication précédente **caractérisé en ce que** les liens coulissants formant les poignées (**15**) sont réalisés dans une matière élastique de sorte à favoriser la fixation du kit (**2**) à un bac (**1**) à litière dans lequel le kit (**2**) est logé.

## Patentansprüche

1. Filterbeutel (3) für Katzenstreu, umfassend:
- einen oberen Teil (8), der einen oberen Rand (9) definiert, der eine Öffnung des Beutels (3) begrenzt;
- einen unteren Teil (10), der einen unteren Rand (11) definiert, wo der Beutel (3) hermetisch dicht verschlossen ist, und
- einen Zwischenteil (12) zwischen dem oberen Teil (8) und dem unteren Teil (10), der mit Perforationen (13) versehen ist, die zum Filtern des Streus bestimmt sind,
**dadurch gekennzeichnet, dass** der Beutel (3) zwischen einer Siebausführung, in der der untere Teil (10) auf den oberen Teil (8) umgelegt ist, um einen Falz zu bilden, zu dem sich im rechten Winkel die Perforationen (13) befinden, wobei es diese Ausführung ermöglicht, eine Filterung des Streus durch die Perforationen (13) durchzuführen, und einer Taschenausführung faltbar ist, in der der Beutel (3) entfaltet wird, und das Streu in dem unteren Teil (10) des Beutels (3) eingefangen wird, wobei diese Ausführung einen hygienischen Transport des Streus ermöglicht, wobei der Beutel (3) ferner ein abnehmbares Befestigungsmittel (14) umfasst, um den unteren Teil (10) auf dem oberen Teil (8) zu halten.

2. Beutel (3) nach dem vorhergehenden Anspruch, **dadurch gekennzeichnet, dass** das abnehmbare Befestigungsmittel (14) in Form eines Klebestreifens vorhanden ist.

3. Beutel (3) nach einem der vorhergehenden Ansprüche, **dadurch gekennzeichnet, dass** der obere Teil (8) Griffe (15) zum Ergreifen des Beutels (3) umfasst.

4. Beutel (3) nach dem vorhergehenden Anspruch, **dadurch gekennzeichnet, dass** die Griffe (15) in Form von Durchzugsbändern vorhanden sind, die im Bereich des oberen Randes (9) angeordnet sind und das Schließen des Beutels (3) ermöglichen.

5. Beutel nach dem vorhergehenden Anspruch, **dadurch gekennzeichnet, dass** die Durchzugsbänder, die die Griffe (15) bilden, aus einem elastischen Material hergestellt sind, um die Befestigung des Beutels (3) an einer Streubox (1), in der der Beutel (3) angeordnet ist, zu begünstigen.

6. Set (2) von Beuteln (3, 4) für Katzenstreu, umfassend Filterbeutel (3) nach einem der vorhergehenden Ansprüche, die für eine automatische Filterung des Streus übereinander angeordnet sind, wenn der Beutel (3) hochgehoben wird, und einen Bodenbeutel (4) für eine verzögerte Filterung des Streus, wobei der Bodenbeutel (4) einen oberen Teil (16), der einen oberen Rand (17) definiert, der eine Öffnung des Beutels (4) begrenzt, und einen unteren Teil (18) definiert, der mit Perforationen (19) versehen ist, um die Filterung des Streus zu ermöglichen.

7. Set (2) nach dem vorhergehenden Anspruch, **dadurch gekennzeichnet, dass** der Bodenbeutel (4) zwischen einer Taschenausführung, in der der untere Teil (18) auf den oberen Teil (16) umgelegt ist, und einer Siebausführung, in der der Bodenbeutel (4) entfaltet ist, um die Filterung des Streus zu ermöglichen, faltbar ist.

8. Set (2) nach dem vorhergehenden Anspruch, **dadurch gekennzeichnet, dass** der Bodenbeutel (4) in seiner Taschenposition durch ein abnehmbares Befestigungsmittel (14) gehalten wird.

9. Set (2) nach dem vorhergehenden Anspruch, **dadurch gekennzeichnet, dass** das abnehmbare Befestigungsmittel (14) in Form eines Klebestreifens vorhanden ist.

10. Set (2) nach einem der Ansprüche 6 bis 9, **dadurch gekennzeichnet, dass** der Bodenbeutel (4) in dem oberen Teil (16) Griffe (15) zum Ergreifen des Beutels (4) umfasst.

11. Set (2) nach dem vorhergehenden Anspruch, **dadurch gekennzeichnet, dass** die Griffe (15) in Form von Durchzugsbändern vorhanden sind, die im Bereich des oberen Randes (17) angeordnet sind und das Schließen des Bodenbeutels (4) ermöglichen.

12. Set (2) nach dem vorhergehenden Anspruch, **dadurch gekennzeichnet, dass** die Durchzugsbänder, die die Griffe (15) bilden, aus einem elastischen Material hergestellt sind, um die Befestigung des Sets (2) an einer Streubox (1), in der das Set (2) angeordnet ist, zu begünstigen.

## Claims

1. Cat-litter-filtering bag (3), comprising:
- an upper part (8) defining an upper edge (9) delimiting an opening of the bag (3);
- a lower part (10) defining a lower edge (11), where the bag (3) is hermetically closed; and
- an intermediate part (12), between the upper part (8) and the lower part (10), provided with perforations (13) designed for filtering the litter,
**characterized in that** the bag (3) can be folded between a sieve configuration, in which the lower part (10) is folded over the upper part (8) so as to form a fold relative to which the perforations (13) are perpendicular, this configuration allowing filtering of the litter through the perforations (13), and a pouch configuration, in which the bag (3) is deployed and the litter is trapped in the lower part (10) of the bag (3), this configuration allowing hygienic transportation of the litter, the bag (3) further comprising a removable hooking means (14) for keeping the lower part (10) on the upper part (8).

2. Bag (3) according to the preceding claim, **characterized in that** the removable hooking means (14) is in the form of an adhesive strip.

3. Bag (3) according to either of the preceding claims, **characterized in that** the upper part (8) comprises handles (15) for gripping the bag (3).

4. Bag (3) according to the preceding claim, **characterized in that** the handles (15) are in the form of sliding ties accommodated at the upper edge (9) and allow the closure of the bag (3).

5. Bag according to the preceding claim, **characterized in that** the sliding ties forming the handles (15) are made from an elastic material so as to promote the fastening of the bag (3) to a litter tray (1) in which the bag (3) is accommodated.

6. Kit (2) of cat-litter bags (3, 4), comprising filtering bags (3) according to one of the preceding claims, which are superposed for automatic filtering of the litter when the bag (3) is raised, and a bottom bag (4) for later filtering of the litter, the bottom bag (4) comprising an upper part (16) defining an upper edge (17) delimiting an opening of the bag (4), and a lower part (18) provided with perforations (19) for allowing filtering of the litter.

7. Kit (2) according to the preceding claim, **characterized in that** the bottom bag (4) can be folded between a pouch configuration, in which the lower part (18) is folded over the upper part (16), and a sieve configuration, in which the bottom bag (4) is unfolded in order to allow filtering of the litter.

8. Kit (2) according to the preceding claim, **characterized in that** the bottom bag (4) is maintained in its pouch position by a removable hooking means (14) .

9. Kit (2) according to the preceding claim, **characterized in that** the removable hooking means (14) is in the form of an adhesive strip.

10. Kit (2) according to one of Claims 6 to 9, **characterized in that** the bottom bag (4) comprises, in the upper part (16), handles (15) for gripping the bag (4) .

11. Kit (2) according to the preceding claim, **characterized in that** the handles (15) are in the form of sliding ties accommodated at the upper edge (17) and allow the closure of the bottom bag (4).

12. Kit (2) according to the preceding claim, **characterized in that** the sliding ties forming the handles (15) are made from an elastic material so as to promote fastening of the kit (2) to a litter tray (1) in which the kit (2) is accommodated.
